# EUROPEAN PATENT SPECIFICATION

(11) **EP 3 974 221 B1**
(45) Date of publication and mention of the grant of the patent: **10.05.2023**
(21) Application number: 21198937.1
(22) Date of filing: 24.09.2021
(51) Int. Cl.: B60K 6/20, B60W 10/06, B60W 10/08, B60W 20/12, B60W 20/50, B60W 50/038

(54) **CONTROL DEVICE AND CONTROL METHOD OF HYBRID VEHICLE**
STEUERUNGSVORRICHTUNG UND STEUERUNGSVERFAHREN EINES HYBRIDFAHRZEUGS
DISPOSITIF DE COMMANDE ET PROCÉDÉ DE COMMANDE DE VÉHICULE ÉLECTRIQUE

(30) Priority: 24.09.2020 JP 2020159633; 07.09.2021 JP 2021145359
(43) Date of publication of application: 30.03.2022
(73) Proprietor: TOYOTA JIDOSHA KABUSHIKI KAISHA, Toyota-shi, Aichi-ken, 471-8571 (JP)
(72) Inventor: YOKOYAMA, Daiki, Aichi-ken, 471-8571 (JP); CHIBA, Hiroya, Aichi-ken, 471-8571 (JP); KAGEURA, Yoshiyuki, Aichi-ken, 471-8571 (JP); SHIMADA, Masanori, Aichi-ken, 471-8571 (JP); SAKAYANAGI, Yoshihiro, Aichi-ken, 471-8571 (JP); SUGIHARA, Hiroyuki, Aichi-ken, 471-8571 (JP); MIYOSHI, Yuji, Aichi-ken, 471-8571 (JP)
(74) Representative: D Young & Co LLP

(56) References cited:
- FR-A1- 3 070 656
- KR-A- 20200 063 538
- US-A1- 2008 319 596
- US-A1- 2019 390 970

## Description

### FIELD

The present invention relates to a control device and a control method of a hybrid vehicle.

### BACKGROUND

In recent years, in order to curb air pollution, low emission zones (for example, LEZ, etc.) which require a vehicle to stop its internal combustion engine when driving through them have been established in locations such as urban areas with large amounts of traffic. When a hybrid vehicle provided with an internal combustion engine and an electric motor is driving through such a low emission zone, it is necessary to stop the internal combustion engine and use only the electric motor to output power for driving use.

In this regard, PTL 1 describes stopping the internal combustion engine if it is judged that the position of a hybrid vehicle is within a low emission zone ("reinforced air pollution preventing region" in PTL 1).

### [CITATIONS LIST]

### [PATENT LITERATURE]

[PTL 1] Japanese Unexamined Patent Publication No. 07-075210

### SUMMARY

### [TECHNICAL PROBLEM]

However, sometimes the precision of estimation of the position of a hybrid vehicle falls along with abnormalities in a vehicle position detection device, changes in the driving environment, etc. In this case, due to mistaken recognition of the position, the internal combustion engine is liable to be operated and the exhaust emissions to deteriorate despite the position of the hybrid vehicle being inside a low emission zone.

Therefore, in consideration of the above problem, an object of the present invention is to keep the exhaust emissions in a low emission zone from deteriorating due to operation of the internal combustion engine when the position of the hybrid vehicle is mistakenly recognized.

### [SOLUTION TO PROBLEM]

The summary of the present invention is as follows.
(1) A control device of a hybrid vehicle for controlling a hybrid vehicle comprising an internal combustion engine, an electric motor, a battery, and a vehicle position detection device, comprising: a position estimating part configured to estimate a position of the hybrid vehicle using the vehicle position detection device; a reliability calculating part configured to calculate a reliability of position information of the hybrid vehicle; and a power output part configured to control the internal combustion engine and the electric motor to output power for driving use, wherein the power output part is configured to reduce the output of the internal combustion engine when the reliability is equal to or less than a reference value, compared to when the reliability is higher than the reference value.
(2) The control device of a hybrid vehicle described in above (1), wherein the power output part is configured to increase the output of the electric motor when the reliability is equal to or less than the reference value, compared to when the reliability is higher than the reference value.
(3) The control device of a hybrid vehicle described in above (1) or (2), wherein the hybrid vehicle further comprises an output device, and if the output of the internal combustion engine is reduced due to reduction in the reliability, the power output part is configured to notify an occupant of the hybrid vehicle of the reduction in the output of the internal combustion engine due to the reduction in the reliability through the output device.
(4) The control device of a hybrid vehicle described in above (3), wherein the power output part is configured to cancel the reduction in the output of the internal combustion engine due to reduction in the reliability in accordance with a demand of the occupant of the hybrid vehicle.
(5) The control device of a hybrid vehicle described in above (1) or (2), wherein the power output part is configured to make the internal combustion engine stop and use only the electric motor to output the power for driving use when the reliability is equal to or less than the reference value.
(6) The control device of a hybrid vehicle described in above (5), wherein the hybrid vehicle further comprises an output device, and if a driving mode of the hybrid vehicle is set to an EV mode stopping the internal combustion engine and using only the electric motor to output the power for driving use due to a reduction of the reliability, the power output part is configured to notify an occupant of the hybrid vehicle of setting of the driving mode due to a reduction in the reliability through the output device.
(7) The control device of a hybrid vehicle described in above (6), wherein the power output part is configured to cancel the setting of the driving mode due to the reduction in the reliability in accordance with a demand of the occupant of the hybrid vehicle.
(8) The control device of a hybrid vehicle described in above any one of (5) to (7), further comprising an SOC calculating part configured to calculate a state of charge of the battery, wherein the hybrid vehicle comprises a GNSS receiver as the vehicle position detection device and the position estimating part is configured to estimate a position of the hybrid vehicle based on an output of the GNSS receiver, and if the position of the hybrid vehicle is near a low emission zone where stopping of the internal combustion engine is requested and the state of charge is equal to or greater than a lower limit threshold, the power output part is configured to make the internal combustion engine stop and use only the electric motor to output the power for driving use when the reliability is equal to or less than the reference value.
(9) The control device of a hybrid vehicle described in above (8), wherein the reliability calculating part is configured to calculate the reliability based on a reception state of the GNSS receiver.
(10) The control device of a hybrid vehicle described in above (8) or (9), wherein the reliability calculating part is configured to calculate the reliability as a value equal to or less than the reference value when a supply of an electric power to the GNSS receiver has been stopped for equal to or greater than a predetermined time.
(11) The control device of a hybrid vehicle described in above any one of (8) to (10), wherein the reliability calculating part is configured to calculate the reliability as a value equal to or less than the reference value when the hybrid vehicle is transported.
(12) The control device of a hybrid vehicle described in above any one of (8) to (11), wherein the reliability calculating part is configured to calculate the reliability as a value equal to or less than the reference value when an advancing direction of the hybrid vehicle has been changed by a turntable.
(13) The control device of a hybrid vehicle described in above any one of (1) to (12), wherein the hybrid vehicle receives position information of the hybrid vehicle from a server outside the hybrid vehicle, and the reliability calculating part is configured to calculate the reliability as a value equal to or less than the reference value when communication between the hybrid vehicle and the server is interrupted.
(14) The control device of a hybrid vehicle described in above any one of (1) to (13), wherein the reliability calculating part is configured to calculate the reliability as a value equal to or less than the reference value when malfunction of the vehicle position detection device is detected.
(15) A control method of a hybrid vehicle comprising an internal combustion engine, an electric motor, a battery, and a vehicle position detection device, including: using the vehicle position detection device to estimate a position of the hybrid vehicle; calculating a reliability of position information of the hybrid vehicle; and reducing an output of the internal combustion engine when the reliability is equal to or less than a reference value, compared to when the reliability is higher than the reference value.

### Advantageous Effects of Invention

According to the present invention, it is possible to keep the exhaust emissions in a low emission zone from deteriorating due to operation of the internal combustion engine when the position of the hybrid vehicle is mistakenly recognized.

### BRIEF DESCRIPTION OF DRAWINGS

FIG. 1 is a view schematically showing the configuration of a hybrid vehicle according to the first embodiment of the present invention.
FIG. 2 is a view showing one example of a power train of a hybrid vehicle according to the first embodiment of the present invention.
FIG. 3 is a functional block diagram of an ECU of FIG. 1.
FIG. 4 is a flow chart showing a control routine for processing for setting a driving mode in the first embodiment of the present invention.
FIG. 5 is a schematic view of a road-vehicle communicator used as a vehicle position detection device.
FIG. 6 is a view schematically showing the configuration of a hybrid vehicle according to the second embodiment of the present invention.
FIG. 7 is a flow chart showing a control routine for processing for setting a driving mode in the second embodiment of the present invention.
FIG. 8 is a flow chart showing a control routine for processing for confirming a cancellation request in the second embodiment of the present invention.
FIG. 9 is a view showing one example of a screen displayed on an HMI when a reduction in the reliability of the position information causes the output of the internal combustion engine to be reduced.
FIG. 10 is a view showing one example of a screen displayed on an HMI when a reduction in the reliability of the position information causes the driving mode to be set to an EV mode.
FIG. 11 is a flow chart showing a control routine for processing for setting a driving mode in the third embodiment of the present invention not explicitly set out in the appended claims.
FIG. 12 is a schematic view of the configuration of a client-server system including a hybrid vehicle according to the fourth embodiment of the present invention.
FIG. 13 is a view schematically showing the configuration of a hybrid vehicle according to the fourth embodiment of the present invention.
FIG. 14 is a flow chart showing a control routine for processing for setting a driving mode in the fourth embodiment of the present invention not explicitly set out in the appended claims.

### DESCRIPTION OF EMBODIMENTS

Below, referring to the drawings, embodiments of the present invention will be explained in detail. Note that, in the following explanation, similar component elements will be assigned the same reference notations.

### <First Embodiment>

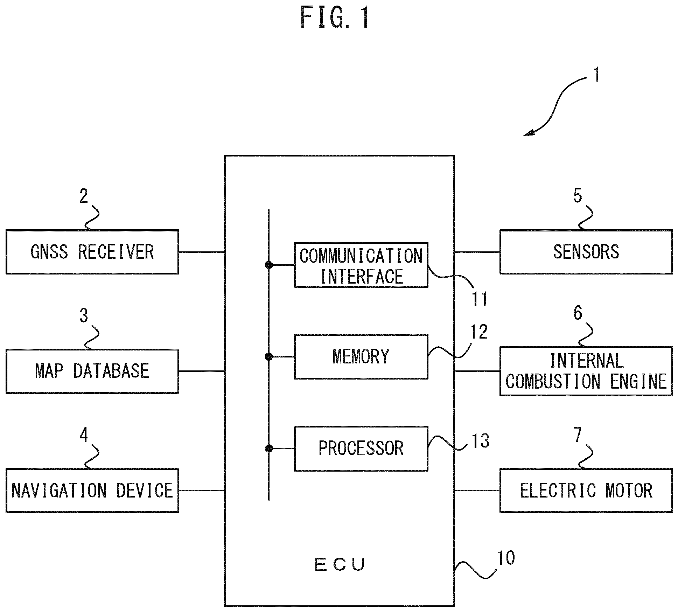

First, referring to FIG. 1 to FIG. 5, a first embodiment of the present invention will be explained.

### <Explanation of Vehicle as Whole>

FIG. 1 is a view schematically showing the configuration of a hybrid vehicle 1 according to the first embodiment of the present invention. As shown in FIG. 1, the hybrid vehicle 1 is provided with a GNSS receiver 2, a map database 3, a navigation device 4, sensors 5, an internal combustion engine 6, an electric motor 7, and an electronic control unit (ECU) 10. The GNSS receiver 2, the map database 3, the navigation device 4, the sensors 5, the internal combustion engine 6, and the electric motor 7 are connected to the ECU 10 to be able to communicate through an internal vehicle network based on the CAN (Controller Area Network) or other standard.

The GNSS receiver 2 captures a plurality of positioning satellites and receives radio waves transmitted from the positioning satellites. The GNSS receiver 2 calculates the distance to the positioning satellites based on the difference between the time of transmission and time of reception of the radio waves and detects the current position of the hybrid vehicle 1 (for example, the longitude and latitude of the hybrid vehicle 1) based on the distances to the positioning satellites and the positions of the positioning satellites (orbit information). The output of the GNSS receiver 2 is transmitted to the ECU 10, and the ECU 10 acquires the current position of the hybrid vehicle 1 from the GNSS receiver 2. The GNSS receiver 2 is one example of a vehicle position detection device detecting the current position of the hybrid vehicle 1. Note that GNSS (Global Navigation Satellite System) is an umbrella term for the U.S.' GPS, Russia's GLONASS, Europe's Galileo, Japan's QZSS, China's BeiDou, India's IRNSS, and other satellite positioning systems. That is, the GNSS receiver 2 includes a GPS receiver.

The map database 3 stores map information. The ECU 10 acquires the map information from the map database 3.

The navigation device 4 sets a driving route of the hybrid vehicle 1 to a destination based on the current position of the hybrid vehicle 1 detected by the GNSS receiver 2, the map information from the map database 3, inputs from the driver, etc. The driving route set by the navigation device 4 is transmitted to the ECU 10. Note that the GNSS receiver 2 and map database 3 may be incorporated in the navigation device 4.

The sensors 5 detect state quantities relating to the hybrid vehicle 1 and include a vehicle speed sensor, a gyro sensor, etc. The outputs of the sensors 5 are transmitted to the ECU 10, and the ECU 10 acquires the state quantities detected by the sensors 5.

The internal combustion engine 6 and the electric motor 7 respectively output power for driving use and function as driving devices for the hybrid vehicle 1. The ECU 10 controls the internal combustion engine 6 and the electric motor 7.

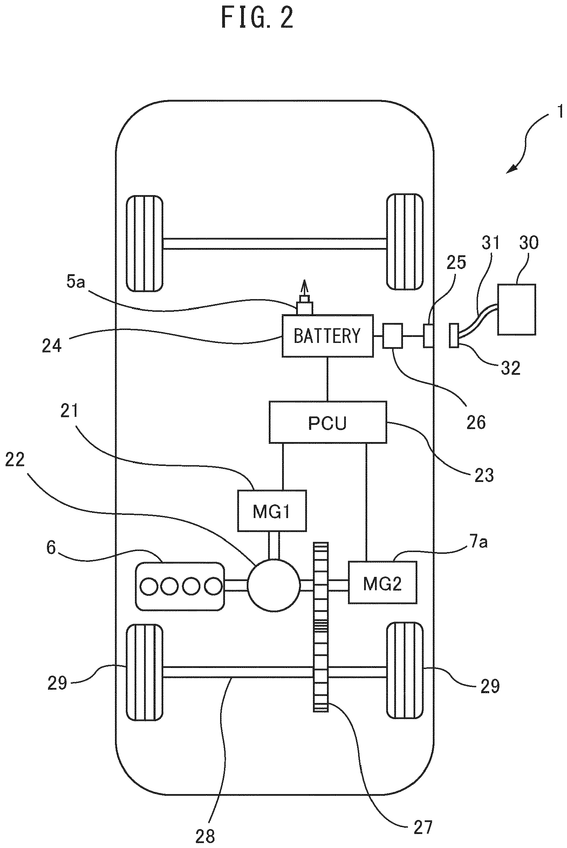

FIG. 2 is a view showing one example of a power train of the hybrid vehicle 1 according to the first embodiment of the present invention. The hybrid vehicle 1 is provided with an internal combustion engine 6, a first motor-generator 21, a power splitting mechanism 22, a second motor-generator 7a, a power control unit (PCU) 23, a battery 24, and a speed reducer 27.

The internal combustion engine 6 outputs power by burning a mixture of fuel and air inside its cylinders and is, for example, a gasoline engine or a diesel engine. The output shaft (crankshaft) of the internal combustion engine 6 is mechanically connected to the power splitting mechanism 22, and the output of the internal combustion engine 6 is input to the power splitting mechanism 22.

The power splitting mechanism 22 is configured as a known planetary gear mechanism including a sun gear, a ring gear, a pinion gear, and a planetary carrier. The power splitting mechanism 22 distributes the output of the internal combustion engine 6 between the first motor-generator 21 and the speed reducer 27. The output of the internal combustion engine 6 distributed to the speed reducer 27 is transmitted as power for driving use to wheels 29 through an axle 28. Therefore, the internal combustion engine 6 can output power for driving use.

The first motor-generator 21 functions as a generator and a motor. When the first motor-generator 21 functions as a generator, the output of the internal combustion engine 6 is supplied through the power splitting mechanism 22 to the first motor-generator 21. The first motor-generator 21 uses the output of the internal combustion engine 6 to generate electrical power. The electrical power generated by the first motor-generator 21 is supplied through the PCU 23 to at least one of the second motor-generator 7a and the battery 24.

On the other hand, when the first motor-generator 21 functions as a motor, the electrical power stored in the battery 24 is supplied through the PCU 23 to the first motor-generator 21. The output of the first motor-generator 21 is supplied through the power splitting mechanism 22 to the output shaft of the internal combustion engine 6, and the internal combustion engine 6 is cranked.

The second motor-generator 7a functions as a motor and a generator. When the second motor-generator 7a functions as a motor, at least one of the electrical power generated by the first motor-generator 21 and the electrical power stored in the battery 24 is supplied to the second motor-generator 7a. The output of the second motor-generator 7a is supplied to the speed reducer 27, and the output of the second motor-generator 7a supplied to the speed reducer 27 is transmitted as power for driving use to the wheels 29 through the axle 28. Therefore, the second motor-generator 7a can output power for driving use. The second motor-generator 7a is one example of the electric motor 7 in FIG. 1.

On the other hand, when the hybrid vehicle 1 is decelerating, the second motor-generator 7a is driven by the rotation of the wheels 29, and the second motor-generator 7a functions as a generator. At this time, so-called regeneration is performed, and the regenerated electrical power generated by the second motor-generator 7a is supplied through the PCU 23 to the battery 24.

The PCU 23 has an inverter, a step-up converter, and a DC-DC converter and is electrically connected to the first motor-generator 21, the second motor-generator 7a, and the battery 24. The PCU 23 converts DC electrical power supplied from the battery 24 to AC electrical power and converts AC electrical power generated by the first motor-generator 21 or the second motor-generator 7a to DC electrical power.

The battery 24 is supplied with the electrical power generated by the first motor-generator 21 using the output of the internal combustion engine 6 and the regenerated electrical power generated by the second motor-generator 7a using regenerated energy. Therefore, the battery 24 can be charged by the output of the internal combustion engine 6 and the regenerated energy. The battery 24 is a lithium-ion battery, a nickel-hydrogen battery, or other secondary battery.

Further, the hybrid vehicle 1 is provided with a charging port 25 and a charger 26. The battery 24 can also be charged by an external power source 30. That is, the hybrid vehicle 1 shown in FIG. 2 is a so-called plug-in hybrid vehicle (PHEV).

The charging port 25 is configured to receive electrical power from the external power source 30 through a charging connector 32 of a charging cable 31. When the battery 24 is charged by the external power source 30, the charging connector 32 is connected to the charging port 25. The charger 26 converts the electrical power supplied from the external power source 30 to electrical power which can be supplied to the battery 24.

Further, an SOC (state of charge) sensor 5a for detecting a state quantity of the battery 24 (voltage, current, etc.) for calculation of the SOC of the battery 24 is provided at the battery 24. The output of the SOC sensor 5a is transmitted to the ECU 10, and the ECU 10 acquires the state quantity of the battery 24 detected by the SOC sensor 5a and calculates the SOC of the battery 24 based on the state quantity of the battery 24.

Note that the first motor-generator 21 may be a generator which does not function as a motor. Further, the second motor-generator 7a may be a motor which does not function as a generator. Further, the charging port 25 may be connected to the PCU 23, and the PCU 23 may function as the charger 26.

### <Control Device of Hybrid Vehicle>

The ECU 10 shown in FIG. 1 executes various types of control of the hybrid vehicle 1. That is, in the present embodiment, the ECU 10 functions as a control device of the hybrid vehicle 1 for controlling the hybrid vehicle 1. Note that, in the present embodiment, one ECU 10 is provided, but a plurality of ECUs may be provided for each function.

As shown in FIG. 1, the ECU 10 includes a communication interface 11, a memory 12, and a processor 13. The communication interface 11, a memory 12, and a processor 13 are connected to each other through signal wires.

The communication interface 11 has an interface circuit for connecting the ECU 10 to an internal vehicle network based on the CAN or other standard. The ECU 10 communicates with other vehicle-mounted equipment such as mentioned above through the communication interface 11.

The memory 12 has, for example, a volatile semiconductor memory (for example, a RAM) and a non-volatile semiconductor memory (for example, a ROM). The memory 12 stores programs to be executed by the processor 13, various data to be used when the processor 13 is executing various processes, etc.

The processor 13 has one or more CPUs (central processing units) and peripheral circuits therefor and executes various processing. Note that the processor 13 may further have a processing circuit such as a logic unit or an arithmetic unit.

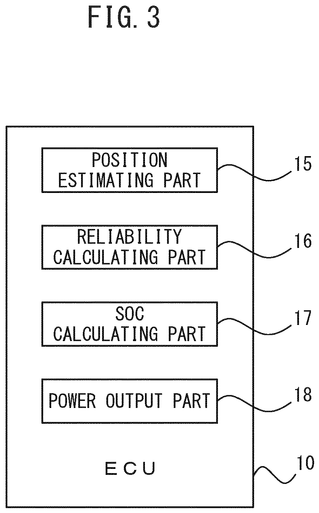

FIG. 3 is a functional block diagram of the ECU 10 in FIG. 1. In the present embodiment, the ECU 10 has a position estimating part 15, a reliability calculating part 16, a SOC calculating part 17, and a power output part 18. The position estimating part 15, the reliability calculating part 16, the SOC calculating part 17, and the power output part 18 are functional modules realized by programs stored in the memory 12 of the ECU 10 being run by the processor 13 of the ECU 10.

The position estimating part 15 estimates the position of the hybrid vehicle 1 using the vehicle position detection device. For example, the position estimating part 15 estimates the position of the hybrid vehicle 1 based on the output of the GNSS receiver 2. The reliability calculating part 16 calculates the reliability of position information of the hybrid vehicle 1. The SOC calculating part 17 calculates the SOC of the battery 24. The power output part 18 controls the internal combustion engine 6 and the electric motor 7 to output power for driving use.

In the present embodiment, the power output part 18 switches the driving mode of the hybrid vehicle 1 between an EV mode and an HV mode. In the EV mode, the power output part 18 stops the internal combustion engine 6 and drives only the electric motor 7. On the other hand, in the HV mode, the power output part 18 drives at least the internal combustion engine 6. For example, the power output part 18 in the HV mode drives the internal combustion engine 6 and the electric motor 7 so that the SOC of the battery 24 becomes a target value. Note that the EV mode is also referred to as a CD (Charge Depleting) mode, and the HV mode is also referred to as a CS (Charge Sustaining) mode.

Normally, the power output part 18 selects the driving mode in accordance with the vehicle state of the hybrid vehicle 1 (demanded output, SOC of the battery 24, etc.). For example, the power output part 18 sets the driving mode to the EV mode until the SOC of the battery 24 calculated by the SOC calculating part 17 falls to a predetermined value and switches the driving mode from the EV mode to the HV mode when the SOC of the battery 24 reaches the predetermined value. Further, even if the SOC of the battery 24 is sufficient, the power output part 18 switches the driving mode from the EV mode to the HV mode when the demanded output becomes higher on an upward grade road or a highway, etc.

In this regard, in order to curb air pollution, low emission zones (for example, LEZ (Low Emission Zone), ULEZ (Ultra Low Emission Zone), ZEZ (Zero Emission Zone), etc.) which require a vehicle to stop its internal combustion engine when driving through them have been established in locations such as urban areas with large amounts of traffic. In such low emission zones, operating internal combustion engines is banned or restricted. In principle, only vehicles that can travel without emitting exhaust gas (for example, hybrid vehicles, electric cars, fuel cell vehicles, etc.) are allowed to pass. If an internal combustion engine is operated in a low emission zone, a fine or the like is imposed on the driver of the vehicle.

Therefore, when a hybrid vehicle 1 is driving through such a low emission zone, it is necessary to make the internal combustion engine 6 stop. For this reason, as much as possible, the power output part 18 makes the internal combustion engine 6 stop and uses only the electric motor 7 to output power for driving use when the position of the hybrid vehicle 1 is within a low emission zone. That is, in the low emission zone, the power output part 18 prioritizes selection of the EV mode over the HV mode as a driving mode.

However, sometimes the precision of estimation of the position of a hybrid vehicle 1 falls along with abnormalities in the vehicle position detection device, changes in the driving environment. In such cases, erroneous position recognition is liable to cause the internal combustion engine 6 to be operated despite the position of the hybrid vehicle 1 being in the low emission zone. In particular, the hybrid vehicle 1 is susceptible to such an issue when driving in the vicinity of the low emission zone. On the other hand, even if the position of the hybrid vehicle 1 is within the low emission zone, when the electrical power that can be supplied from the battery 24 to the electric motor 7 is insufficient, it is difficult to make the hybrid vehicle 1 run using only the output of the electric motor 7.

For this reason, in the present embodiment, the power output part 18 reduces the output of the internal combustion engine 6 when the reliability of the position information of the hybrid vehicle 1 is equal to or less than a reference value, compared to when the reliability of the position information of the hybrid vehicle 1 is higher than the reference value. Due to this, when the position of the hybrid vehicle 1 is mistakenly recognized, it is possible to keep the exhaust emissions in a low emission zone from deteriorating due to operation of the internal combustion engine 6.

### <Processing for Setting Driving Mode>

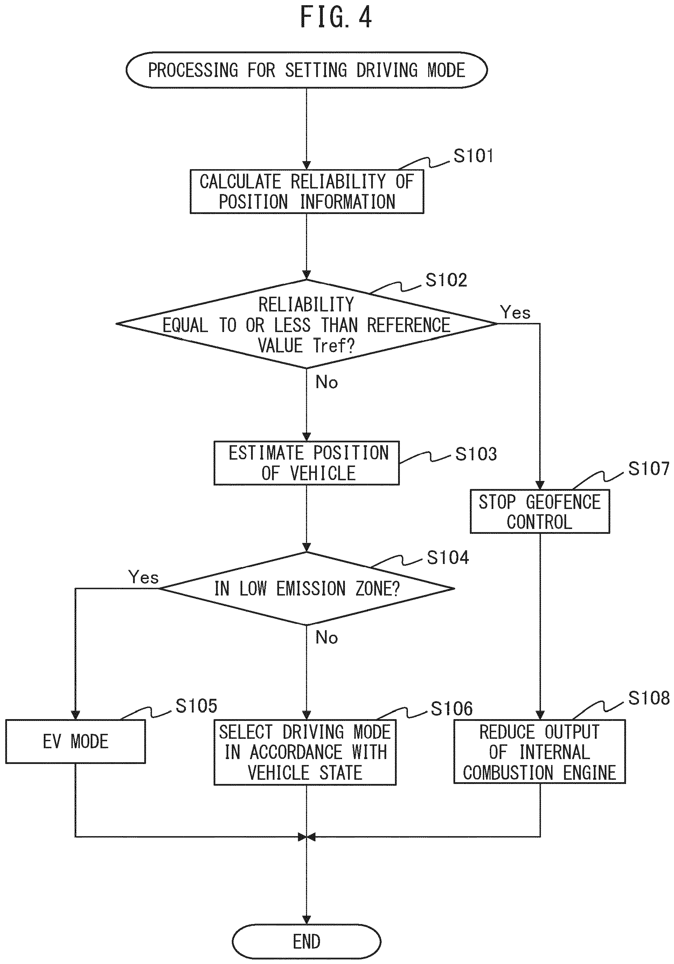

Below, using the flow chart of FIG. 4, the above-mentioned control will be explained in detail. FIG. 4 is a flow chart showing a control routine for processing for setting a driving mode in a first embodiment of the present invention. The present control routine is repeatedly performed by the ECU 10 at predetermined execution intervals.

First, at step S101, the reliability calculating part 16 calculates the reliability of the position information of the hybrid vehicle 1 (below, simply referred to as the "reliability of the position information"). For example, the reliability calculating part 16 judges whether there is any malfunction in the GNSS receiver 2, and when detecting malfunction of the GNSS receiver 2, calculates the reliability of the position information as a value equal to or less than the reference value Tref (for example, zero). In this case, for example, the reliability calculating part 16 judges that the GNSS receiver 2 is malfunctioning if disconnection of a wire etc. causes the output of the GNSS receiver 2 to not be sent to the ECU 10, if the GNSS receiver 2 cannot receive radio waves from positioning satellites for more than a predetermined time while the hybrid vehicle 1 is running, etc.

Next, at step S102, the power output part 18 judges whether the reliability of the position information calculated by the reliability calculating part 16 is equal to or less than a reference value Tref. The reference value Tref is determined in advance.

If it is judged at step S102 that the reliability of the position information is higher than the reference value Tref, the present control routine proceeds to step S103. At step S103, the position estimating part 15 estimates the position (current position) of the hybrid vehicle 1 based on the output of the GNSS receiver 2. Specifically, the position estimating part 15 uses the map information of the map database 3, the output of the GNSS receiver 2, and a known autonomous navigation technique (dead reckoning) to estimate the position of the hybrid vehicle 1. That is, the position estimating part 15 specifies a reference point (base point) on a map based on the map information of the map database 3 and the output of the GNSS receiver 2 and calculates the travel distance and the travel direction of the hybrid vehicle 1 with respect to the reference point based on the outputs of sensors 5 such as the vehicle speed sensor and the gyro sensor to thereby estimate the position of the hybrid vehicle 1.

Next, at step S104, the power output part 18 judges whether the position of the hybrid vehicle 1 estimated by the position estimating part 15 is within a low emission zone. Position information of low emission zones is stored in the map information of the map database 3. The power output part 18 makes this judgment by comparing the estimated position of the hybrid vehicle 1 with the ranges of the low emission zones.

If, at step S104, it is judged that the position of the hybrid vehicle 1 is within a low emission zone, the present control routine proceeds to step S105. At step S105, the power output part 18 sets the driving mode of the hybrid vehicle 1 to the EV mode. That is, the power output part 18 performs geofence control forcibly setting the driving mode of the hybrid vehicle 1 to the EV mode only within a low emission zone. After step S105, the present control routine ends.

On the other hand, if, at step S104, it is judged that the position of the hybrid vehicle 1 is outside the low emission zones, the present control routine proceeds to step S106. At step S106, the power output part 18 selects the driving mode in accordance with the state of the hybrid vehicle 1 (demanded output, SOC of the battery 24, etc.) After step S106, the present control routine ends.

Further, if, at step S 102, it is judged that the reliability of the position information is equal to or less than the reference value Tref, the present control routine proceeds to step S 107. At step S107, the power output part 18 stops the geofence control.

Next, at step S 108, the power output part 18 performs output reducing control for reducing the output of the internal combustion engine 6. For example, the power output part 18 lowers the upper limit of the output of the internal combustion engine 6 compared to when the reliability of the position information is higher than the reference value Tref. Due to this, it is possible to keep the exhaust emissions from deteriorating when the internal combustion engine 6 is operated in a low emission zone. Further, the power output part 18 may reduce the value of the SOC of the battery 24 when the driving mode of the hybrid vehicle 1 is switched from the EV mode to the HV mode compared to when the reliability of the position information is higher than the reference value Tref. Due to this, it is possible to reduce the frequency by which the internal combustion engine 6 is operated in a low emission zone. After step S108, the present control routine ends.

Note that at step S101, the reliability calculating part 16 may calculate the reliability of the position information based on the state of reception of the GNSS receiver 2. In such a case, the reliability calculating part 16, for example, calculates the reliability of the position information based on the number of positioning satellites captured by the GNSS receiver 2. When the number of positioning satellites captured by the GNSS receiver 2 is equal to or less than a predetermined number (for example, 2 or 3), it calculates the reliability of the position information as a value equal to or less than the reference value Tref. Further, the reliability calculating part 16 may calculate the reliability of the position information based on a DOP (dilution of precision) value relating to the GNSS receiver 2 and, when the DOP value is equal to or greater than a predetermined value, calculate the reliability of the position information as a value equal to or less than the reference value Tref. In such a case, the DOP value can be the value of any one of HDOP (horizontal dilution of precision) and VDOP (vertical dilution of precision) or the average of the HDOP and VDOP values.

Further, in a so-called cold start state where the GNSS receiver 2 is restarted after the orbit information of the positioning satellites is erased due to time elapse or the like, capturing the positioning satellites to receive radio waves will take time. For this reason, when the supply of power to the GNSS receiver 2 stops for equal to or greater than a predetermined time, the reliability calculating part 16 may calculate the reliability of the position information as a value equal to or less than the reference value T_{ref}. The predetermined time is set to the time from when the supply of power to the GNSS receiver 2 is stopped to when the orbit information of the positioning satellites is erased. That is, when a cold start of the GNSS receiver 2 is performed, the reliability calculating part 16 may calculate the reliability of the position information as a value equal to or less than the reference value Tref.

Further, when the hybrid vehicle 1is transported by a ferry, an auto-transport trailer, etc., the position of the hybrid vehicle 1 cannot be estimated using the autonomous navigation technique. For this reason, when the hybrid vehicle 1 is transported, the reliability calculating part 16 may calculate the reliability of the position information as a value equal to or less than the reference value Tref.

Immediately after the hybrid vehicle 1 has been transported, the general position of the hybrid vehicle 1 can be grasped based on the output of the GNSS receiver 2. For this reason, the fact of the hybrid vehicle 1 having been transported may be determined based on, for example, the output of the GNSS receiver 2. When the position of the hybrid vehicle 1 has greatly changed at the time the GNSS receiver 2 is restarted, it is judged that the hybrid vehicle 1 has been transported. Further, the fact of the hybrid vehicle 1 having been transported by a ferry may be determined based on the driving route set by the navigation device 4.

Further, when the advancing direction of the hybrid vehicle 1 is changed by a turntable in a location such as a multistory parking lot, the position of the hybrid vehicle 1 estimated by the autonomous navigation technique will deviate from the actual position. For this reason, when the advancing direction of the hybrid vehicle 1 is changed by a turntable, the reliability calculating part 16 may calculate the reliability of the position information as a value equal to or less than the reference value T_{ref}. For example, information relating to a parking lot (for example, whether or not a turntable is present) is stored in the map information of the map database 3 and, when the hybrid vehicle 1 has parked in a parking lot with a turntable, it is judged that the advancing direction of the hybrid vehicle 1 has been changed by the turntable.

Further, sometimes a portable terminal (for example, a smartphone, a tablet terminal, a laptop, etc.) brought into the hybrid vehicle 1 by the driver or the like is electrically connected to the hybrid vehicle 1 (specifically, the ECU 10) by a cable or wireless connection. In such cases, when the distance between the position of the hybrid vehicle 1 estimated by the position estimating part 15 and the position of the hybrid vehicle 1 detected by the portable terminal is equal to or greater than a predetermined distance, the reliability calculating part 16 may calculate the reliability of the position information as a value equal to or less than the reference value Tref.

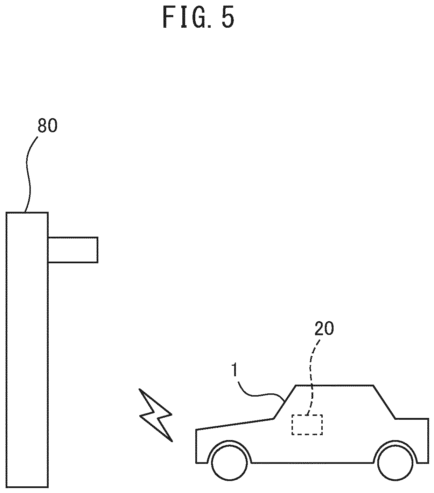

Further, the hybrid vehicle 1 may be provided with a road-vehicle communicator 20 such as shown in FIG. 5 as the vehicle position detection device, instead of the GNSS receiver 2. The road-vehicle communicator 20 is electrically connected to the ECU 10 and enables communication between the hybrid vehicle 1 and a road side device 80 using a predetermined frequency band. In this case, for example, the position estimating part 15 uses the map information of the map database 3, the results of communication with the road side device 80, and the known self navigation method (dead reckoning) to estimate the position of the hybrid vehicle 1. That is, the position estimating part 15 identifies a reference point (base point) on the map based on the map information of the map database 3 and the results of communication with the road side device 80, and estimates the position of the hybrid vehicle 1 by calculating the distance of movement and direction of movement of the hybrid vehicle 1 with respect to the reference point based on the outputs of sensors 5 such as the vehicle speed sensor and the gyro sensor.

If the road-vehicle communicator 20 is used as the vehicle position detection device, at step S101, for example, the reliability calculating part 16 judged whether there is any malfunction in the road-vehicle communicator 20, and when detecting malfunction of the road-vehicle communicator 20, calculates the reliability of the position information as a value equal to or less than the reference value Tref (for example, zero). In this case, for example, if disconnection of a wire etc. causes the output of the road-vehicle communicator 20 to not be sent to the ECU 10 etc., the reliability calculating part 16 judges that the road-vehicle communicator 20 is malfunctioning. Note that, when communication with the road side device 80 is interrupted for equal to or greater than a predetermined time while the hybrid vehicle 1 is running, the reliability calculating part 16 may calculate the reliability of the position information as a value equal to or less than the reference value Tref.

Further, the power output part 18 may reduce the output of the internal combustion engine 6 and increase the output of the electric motor 7 when the reliability of the position information is equal to or less than the reference value Tref, compared to when the reliability of the position information is higher than the reference value Tref. In this case, for example, at step S108, the power output part 18 reduces the ratio of the output of the internal combustion engine 6 to the demanded output and raises the ratio of the output of the electric motor 7 to the demanded output, compared to when the reliability of the position information is higher than the reference value Tref. Due to this, it is possible to keep the exhaust emissions from deteriorating when the internal combustion engine 6 is operated in a low emission zone while keeping the acceleration performance of the hybrid vehicle 1 from falling due to the reduction in the output of the internal combustion engine 6.

Further, the power output part 18 may make the output of the internal combustion engine 6 zero when reducing the output of the internal combustion engine 6. That is, when the reliability of the position information is equal to or less than the reference value Tref, the power output part 18 may make the internal combustion engine 6 stop and use only the electric motor 7 to output the power for driving use. In this case, at step S108, the power output part 18 sets the driving mode of the hybrid vehicle 1 to the EV mode. Due to this, it is possible to keep the internal combustion engine 6 from being operated in a low emission zone.

### <Second Embodiment>

The control device of a hybrid vehicle according to the second embodiment is basically similar to the control device of a hybrid vehicle according to the first embodiment except for the point explained below. For this reason, below, the second embodiment of the present invention will be explained focusing on the parts different from the first embodiment.

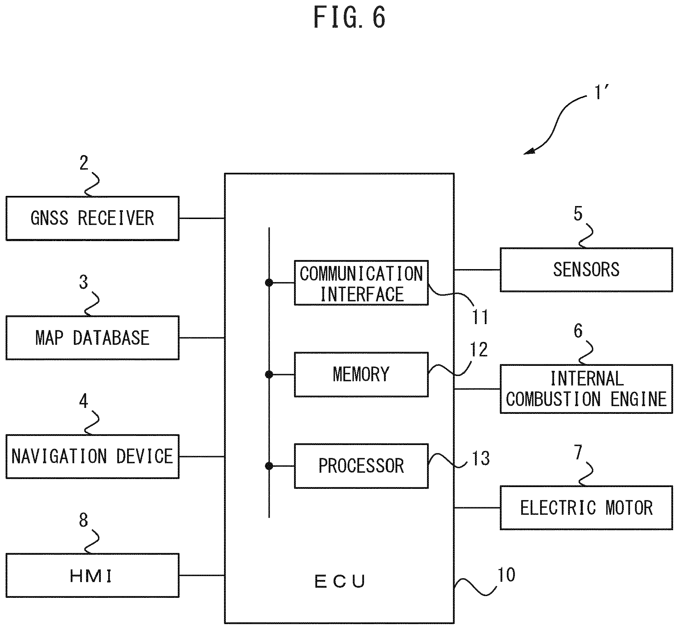

FIG. 6 is a view schematically showing a hybrid vehicle 1' according to the second embodiment of the present invention. As shown in FIG. 6, the hybrid vehicle 1' is provided with an HMI (human machine interface) 8 in addition to the GNSS receiver 2, the map database 3, navigation device 4, sensors 5, the internal combustion engine 6, the electric motor 7, and the ECU 10. The GNSS receiver 2, the map database 3, the navigation device 4, the sensors 5, the internal combustion engine 6, the electric motor 7, and the HMI 8 are connected to the ECU 10 to be able to communicate through an internal vehicle network based on the CAN or other standard.

The HMI 8 inputs and outputs information between the hybrid vehicle 1' and an occupant of the hybrid vehicle 1' (for example, a driver). The HMI 8, for example, includes a display displaying information, a speaker generating sound, an operating button or operating switch for an occupant to operate to enter instructions, a microphone for receiving voice commands of the occupant, etc. The display of the HMI 8 includes a touch screen, a heads up display, a digital instrument panel, etc. The output of the ECU 10 is notified to the occupant through the HMI 8, while the input of the occupant is sent to the ECU 10 through the HMI 8. The HMI 8 is one example of an input device, an output device, or an input/output device. Note that, HMI 8 may be integral with the navigation device 4.

As explained above, when the reliability of the position information is equal to or less than the reference value, the power output part 18 reduces the output of the internal combustion engine 6 compared to when the reliability of the position information is higher than the reference value. However, if forcibly reducing the output of the internal combustion engine 6 regardless of the intent of the occupant of the hybrid vehicle 1', the occupant is liable to feel unease over the behavior of the vehicle 1'.

Therefore, in the second embodiment, if the output of the internal combustion engine 6 is reduced due to reduction in the reliability, the power output part 18 notifies the reduction in the output of the internal combustion engine 6 due to the reduction in the reliability through the HMI 8 to the occupant of the hybrid vehicle 1' (for example, the driver). Due to this, a change in control of output in the hybrid vehicle 1' is clearly shown to the occupant of the hybrid vehicle 1', and therefore it is possible to raise the relaxed feeling of the occupant of the hybrid vehicle 1'.

Further, if the possibility of the hybrid vehicle 1' running through a low emission zone is low, for example, if the hybrid vehicle 1' is running through an area with no low emission zones, there is little need to reduce the output of the internal combustion engine 6. Further, it is considered that the occupant of the hybrid vehicle 1' would not like a reduction in the output of the internal combustion engine 6 even if the hybrid vehicle 1' is running near a low emission zone.

For this reason, in the second embodiment, if an occupant of the hybrid vehicle 1' (for example, the driver) inputs cancellation of the reduction in the output of the internal combustion engine 6 into the HMI 8, the power output part 18 cancels the reduction in the output of the internal combustion engine 6 due to the reduction in the reliability of the position information. That is, the power output part 18 cancels the reduction in the output of the internal combustion engine 6 due to the reduction in the reliability of the position information in accordance with a demand of an occupant of the hybrid vehicle 1'. Due to this, it is possible to avoid the reduction in the output of the internal combustion engine 6 continuing contrary to the intent of the occupant of the hybrid vehicle 1'.

### <Processing for Setting Driving Mode>

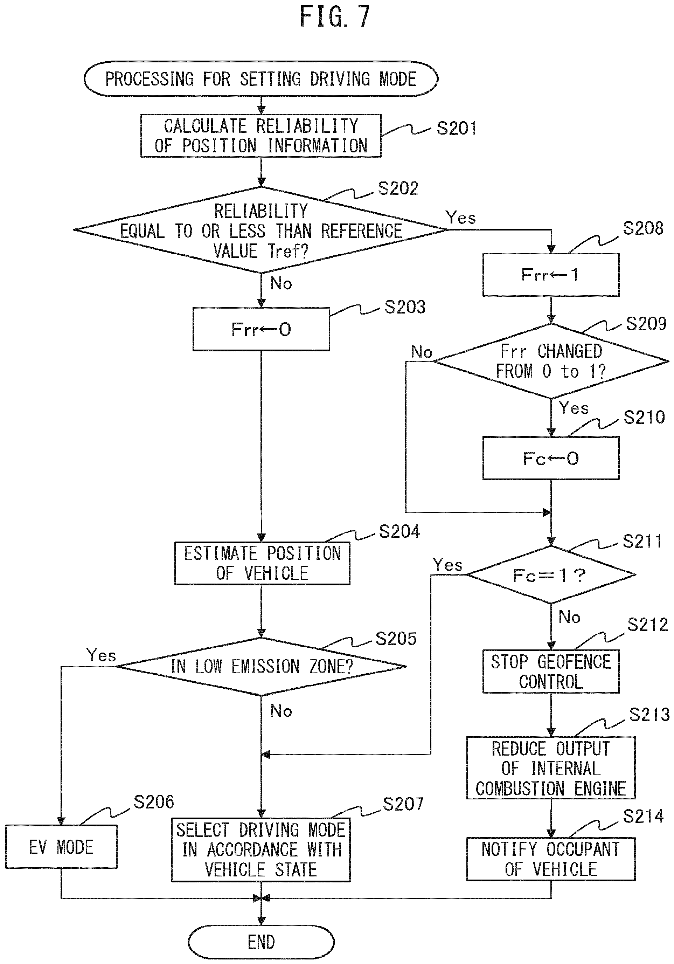

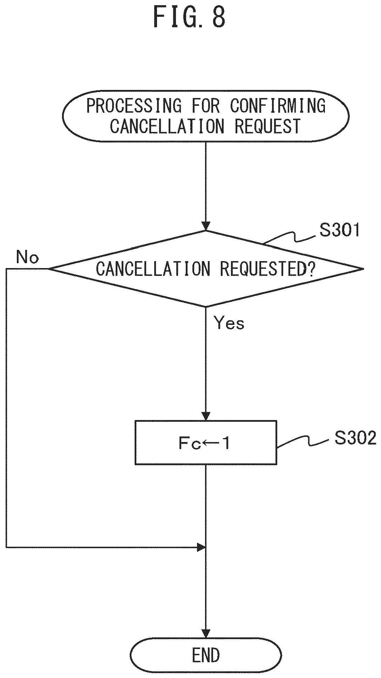

Below, using the flow charts of FIG. 7 and FIG. 8, the above-mentioned control will be explained in detail. FIG. 7 is a flow chart showing a control routine for processing for setting a driving mode in the second embodiment of the present invention. The present control routine is repeatedly performed by the ECU 10 at predetermined execution intervals.

Steps S201 and S202 are performed in the same way as steps S101 and S102 of FIG. 4. If, at step S202, it is judged that the reliability of the position information is higher than the reference value Tref, the present control routine proceeds to step S203. At step S203, the power output part 18 sets a reliability reduction flag Frr to zero. Note that, the initial value of the reliability reduction flag Frr when the ignition switch of the hybrid vehicle 1' is turned to ON is zero. After step S203, steps S204 to S207 are performed in the same way as steps S103 to S106 of FIG. 4.

On the other hand, if, at step S202, it is judged that the reliability of the position information is equal to or less than the reference value Tref, the present control routine proceeds to step S208. At step S208, the power output part 18 sets the reliability reduction flag Frr to "1".

Next, at step S209, the power output part 18 judges whether the reliability reduction flag Frr has been changed from zero to "1", that is, whether the reliability of the position information has been changed from a value higher than the reference value Tref to a value equal to or less than the reference value Tref. If it is judged that the reliability reduction flag Frr has been changed from zero to "1", the present control routine proceeds to step S210.

At step S210, the power output part 18 resets a cancellation flag Fc to zero. After step S210, the present control routine proceeds to step S211. On the other hand, if, at step S209, it is judged that the reliability reduction flag Frr is maintained at "1", the present control routine skips step S210 and proceeds to step S211.

At step S211, the power output part 18 judges whether the cancellation flag Fc is "1". If it is judged that the cancellation flag Fc is zero, that is, if an occupant of the hybrid vehicle 1' has not requested cancellation of the reduction in the output of the internal combustion engine 6, the present control routine proceeds to step S212.

At step S212, in the same way as step S107 of FIG. 4, the power output part 18 stops the geofence control. Next, at step S213, in the same way as step S108 of FIG. 4, the power output part 18 performs output reducing control for reducing the output of the internal combustion engine 6.

Next, at step S214, the power output part 18 notifies the occupants of the hybrid vehicle 1' through the HMI 8 of the reduction in the output of the internal combustion engine 6 due to the reduction in the reliability of the position information. For example, the power output part 18 displays text information showing the reduction in the output of the internal combustion engine 6 due to the reduction in the reliability of the position information on the HMI 8. Note that, in addition to the text information or in place of the text information, the power output part 18 may make the HMI 8 output audio information showing the reduction in the output of the internal combustion engine 6 due to the reduction in the reliability of the position information. That is, the power output part 18 visually or audibly notifies the occupant of the hybrid vehicle 1' through the HMI 8 of the reduction in the output of the internal combustion engine 6 due to the reduction in the reliability of the position information.

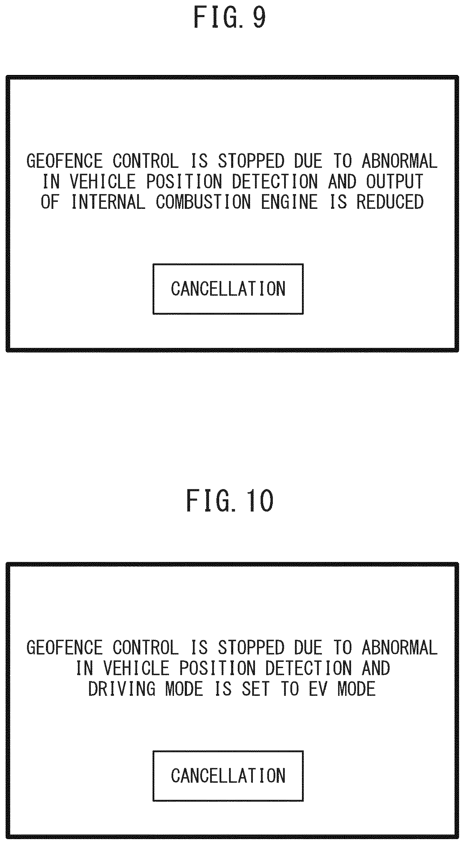

Further, the power output part 18 may notify the occupant of the hybrid vehicle 1' of the stop of the geofence control due to the reduction in the reliability of the position information in addition to the reduction in the output of the internal combustion engine 6 due to the reduction in the reliability of the position information. FIG. 9 is a view showing one example of a screen shown on the HMI 8 when reducing the output of the internal combustion engine 6 due to the reduction in the reliability of the position information. After step S214, the present control routine ends.

On the other hand, if, at step S211, it is judged that the cancellation flag Fc is 1, that is, if an occupant of the hybrid vehicle 1' requests cancellation of the reduction in the output of the internal combustion engine 6, the present control routine proceeds to step S207. At step S207, the power output part 18 cancels the reduction in the output of the internal combustion engine 6 and selects the driving mode in accordance with the vehicle state of the hybrid vehicle 1 (demanded output, SOC of the battery 24, etc.) After step S207, the present control routine ends.

### <Processing for Confirming Cancellation Request>

FIG. 8 is a flow chart showing a control routine for processing for confirming a cancellation request in the second embodiment of the present invention. The present control routine is repeatedly performed by the ECU 10 at predetermined execution intervals.

First, at step S301, the power output part 18 judges whether cancellation of the reduction in the output of the internal combustion engine 6 is requested by an occupant of the hybrid vehicle 1'. Reduction in the output of the internal combustion engine 6 due to the reduction in the reliability of the position information is notified to the occupant of the hybrid vehicle 1' and the occupant of the hybrid vehicle 1' requests cancellation of the reduction in the output of the internal combustion engine 6 through the HMI 8. For example, as shown in FIG. 9, a cancellation button is displayed at the HMI 8 and an occupant of the hybrid vehicle 1' selects the cancellation button to thereby request cancellation of the reduction in the output of the internal combustion engine 6. Note that, an occupant of the hybrid vehicle 1' may input a voice command to the HMI 8 to thereby request cancellation of the reduction in the output of the internal combustion engine 6.

If, at step S301, it is judged that cancellation of the reduction in the output of the internal combustion engine 6 has not been requested, the present control routine ends. On the other hand, if, at step S301, it is judged that cancellation of the reduction in the output of the internal combustion engine 6 has been requested, the present control routine proceeds to step S302. At step S302, the power output part 18 sets the cancellation flag Fc to 1. After step S302, the present control routine ends.

Note that, the control routine of FIG. 7 can be modified in the same way as the control routine of FIG. 4. For example, at step S213, the power output part 18 may set the driving mode of the hybrid vehicle 1' to the EV mode. In this case, at step S214, the power output part 18 visually or audibly notifies the occupant of the hybrid vehicle 1' through the HMI 8 of the setting of the driving mode due to the reduction in the reliability of the position information. FIG. 10 is a view showing one example of the screen shown at the HMI 8 when a reduction in the reliability of the position information causes the driving mode to be set to the EV mode. In this case, an occupant of the hybrid vehicle 1' selects the cancellation button to thereby request cancellation of the setting of the driving mode. Note that, an occupant of the hybrid vehicle 1' may input a voice command to the HMI 8 to cancel the setting of the driving mode.

### <Third Embodiment>

The control device of a hybrid vehicle according to the third embodiment is basically similar to the control device of a hybrid vehicle according to the first embodiment except for the point explained below. For this reason, below, the third embodiment of the present invention will be explained focusing on the parts different from the first embodiment.

As explained above, if the reliability of the position information is reduced, due to the mistaken recognition of position, the internal combustion engine 6 is liable to be operated despite the position of the hybrid vehicle 1 being inside a low emission zone. In particular, such a problem is liable to occur when the hybrid vehicle 1 is running near a low emission zone. On the other hand, even if the position of the hybrid vehicle 1 is inside a low emission zone, when the electric power able to be supplied from the battery 24 to the electric motor 7 is insufficient, it is difficult to use only the output of the electric motor 7 to make the hybrid vehicle 1 run.

For this reason, in the third embodiment, if the position of the hybrid vehicle 1 is near a low emission zone and the SOC of the battery 24 is equal to or greater than a lower limit threshold, the power output part 18 makes the internal combustion engine 6 stop and uses only the electric motor 7 to output the power for driving use when the reliability of the position information of the hybrid vehicle 1 is equal to or less than the reference value. That is, if the position of the hybrid vehicle 1 is near a low emission zone and the SOC of the battery 24 is equal to or greater than a lower limit threshold, the power output part 18 sets the driving mode of the hybrid vehicle 1 to the EV mode when the reliability of the position information of the hybrid vehicle 1 is equal to or less than the reference value. Due to this, when the position of the hybrid vehicle 1 is mistakenly recognized, it is possible to keep the internal combustion engine 6 from being operated in a low emission zone.

### <Processing for Setting Driving Mode>

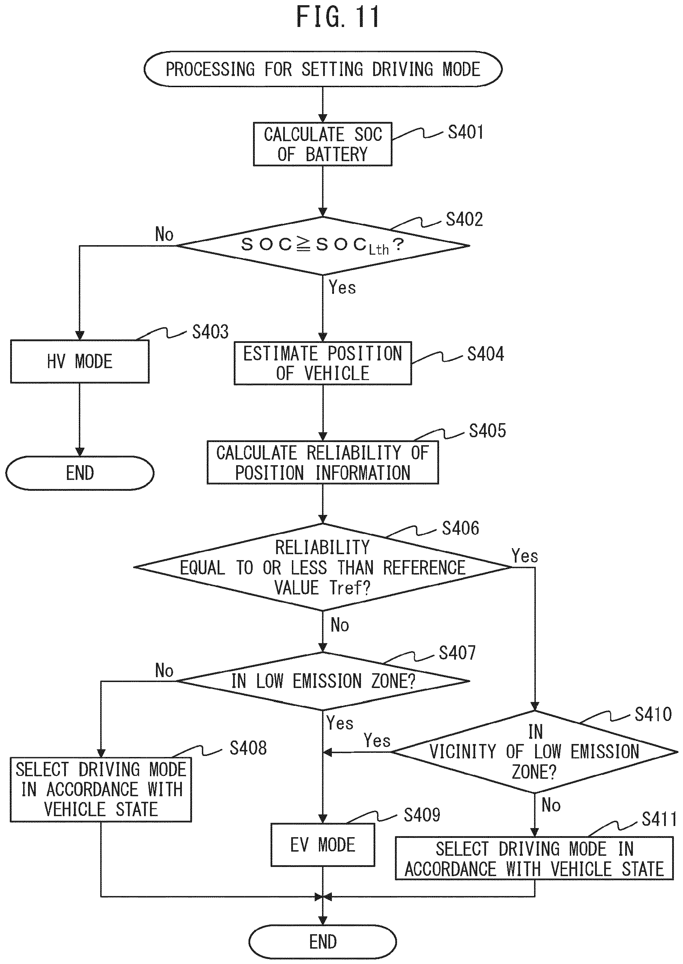

Below, referring to a flow chart of FIG. 11, the above-mentioned control will be explained in detail. FIG. 11 is a flow chart showing a control routine for processing for setting a driving mode in the third embodiment of the present invention. The present control routine is repeatedly performed by the ECU 10 at predetermined execution intervals.

First, at step S401, the SOC calculating part 17 calculates the SOC of the battery 24 by a known technique based on the state quantity of the battery 24 (voltage, current, etc.) detected by the SOC sensor 5a.

Next, at step S402, the power output part 18 judges whether the SOC of the battery 24 calculated by the SOC calculating part 17 is equal to or greater than a lower limit threshold SOCLth. The lower limit threshold SOCLth is determined in advance considering deterioration of the battery 24 etc. Note that, the lower limit threshold SOCLth is set to a value smaller than the value when the driving mode is switched from the EV mode to the HV mode due to the reduction in the SOC of the battery 24 at a location other than a low emission zone.

If, at step S402, it is judged that the SOC of the battery 24 is less than the lower limit threshold SOCLth, the present control routine proceeds to step S403. At step S403, the power output part 18 sets the driving mode of the hybrid vehicle 1 to the HV mode so as to raise the SOC of the battery 24. That is, the power output part 18 operates the internal combustion engine 6 and outputs the power for driving use by the internal combustion engine 6.

On the other hand, if, at step S402, it is judged that the SOC of the battery 24 is equal to or greater than the lower limit threshold SOCLth, the present control routine proceeds to step S404. At step S404, in the same way as step S 103 of FIG. 4, the position estimating part 15 estimates the position of the hybrid vehicle 1 (current position) based on the output of the GNSS receiver 2.

Next, at step S405, in the same way as step S101 of FIG. 4, the reliability calculating part 16 calculates the reliability of the position information. Next, at step S406, in the same way as step S102 of FIG. 4, the power output part 18 judges whether the reliability of the position information calculated by the reliability calculating part 16 is equal to or less than the reference value Tref.

If, at step S406, it is judged that the reliability of the position information is higher than the reference value Tref, the present control routine proceeds to step S407. At step S407, in the same way as step S 104 of FIG. 4, the power output part 18 judges whether the position of the hybrid vehicle 1 estimated by the position estimating part 15 is within a low emission zone.

If, at step S407, it is judged that the position of the hybrid vehicle 1 is outside of the low emission zones, the present control routine proceeds to step S408. At step S408, the power output part 18 selects the driving mode in accordance with the vehicle state of the hybrid vehicle 1 (demanded output, SOC of battery 24, etc.). After step S408, the present control routine ends.

On the other hand, if, at step S407, it is judged that the position of the hybrid vehicle 1 is inside a low emission zone, the present control routine proceeds to step S409. At step S409, the power output part 18 sets the driving mode to the EV mode. That is, regardless of the demanded output, the power output part 18 makes the internal combustion engine 6 stop and uses only the electric motor 7 to output the power for driving use. After step S409, the present control routine ends.

Further, at step S406, if the reliability of the position information is equal to or less than the reference value Tref, the present control routine proceeds to step S410. At step S410, the power output part 18 judges whether the position of the hybrid vehicle 1 is near a low emission zone. For example, the power output part 18 judges that the position of the hybrid vehicle 1 is near a low emission zone if the distance between the position of the hybrid vehicle 1 finally estimated by the position estimating part 15 when the reliability of the position information is higher than the reference value Tref and a low emission zone (for example, a center position of a low emission zone) is equal to or less than a predetermined distance.

Note that, the power output part 18 may judge the position of the hybrid vehicle 1 is near a low emission zone if the distance between at least one point on the driving route set by the navigation device 4 and a low emission zone (for example, a center position of a low emission zone) is equal to or less than a predetermined distance. Further, the power output part 18 may judge whether the position of the hybrid vehicle 1 is near a low emission zone based on received information from the outside such as information of a VICS^{®} (Vehicle Information and Communication System).

If, at step S410, it is judged that the position of the hybrid vehicle 1 is near a low emission zone, the present control routine proceeds to step S409. At step S409, the power output part 18 sets the driving mode to the EV mode. That is, regardless of the demanded output, the power output part 18 makes the internal combustion engine 6 stop and uses only the electric motor 7 to output the power for driving use. After step S409, the present control routine ends.

On the other hand, if it is judged at step S410 that the position of the hybrid vehicle 1 is not in the vicinity of a low emission zone, the present control routine proceeds to step S411. At step S411, the power output part 18 selects the driving mode in accordance with the vehicle state of the hybrid vehicle 1 (demanded output, SOC of the battery 24, etc.) After step S411, the present control routine ends.

### <Fourth Embodiment>

A control device of a hybrid vehicle according to a fourth embodiment is basically similar to the control device of a hybrid vehicle according to the third embodiment with the exception of the points explained below. For this reason, below, the parts of the fourth embodiment of the present invention different from the third embodiment will be focused on in the explanation.

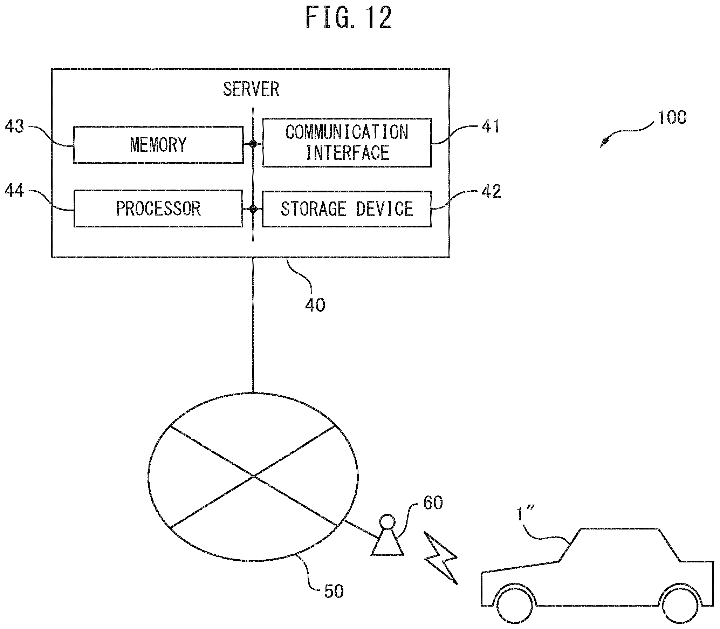

FIG. 12 is a schematic view of the configuration of a client-server system 100 including a hybrid vehicle 1" according to the fourth embodiment of the present invention. The client-server system 100 comprises the hybrid vehicle 1" and a server 40. The server 40 is capable of communicating with a plurality of vehicles including the hybrid vehicle 1".

As shown in FIG. 12, the server 40 is provided outside the hybrid vehicle 1" and is provided with a communication interface 41, a storage device 42, a memory 43, and a processor 44. Note that the server 40 may further be provided with input devices such as a keyboard and mouse, output devices such as a display etc. Further, the server 40 may be constituted by a plurality of computers.

The communication interface 41 is capable of communicating with the hybrid vehicle 1" and enables the server 40 to communicate with the hybrid vehicle 1". Specifically, the communication interface 41 has an interface circuit for connecting the server 40 to a communication network 50. The server 40 communicates with the hybrid vehicle 1" through the communication interface 41, the communication network 50, and a wireless base station 60.

The storage device 42 has, for example, a hard disk drive (HDD), a solid state drive (SSD), an optical recording medium, etc. The storage device 42 stores various data, for example, computer programs by which the processor 44 executes various processing etc.

The memory 43 has, for example, a semiconductor memory such as a random access memory (RAM). The memory 43 stores, for example, various data to be used when various processing are executed by the processor 44.

The communication interface 41, the storage device 42, and the memory 43 are connected to the processor 44 through signal wires. The processor 44 has one or more CPUs and peripheral circuits therefor and executes various processing. Note that the processor 44 may further have a processing circuit such as a logic unit or an arithmetic unit.

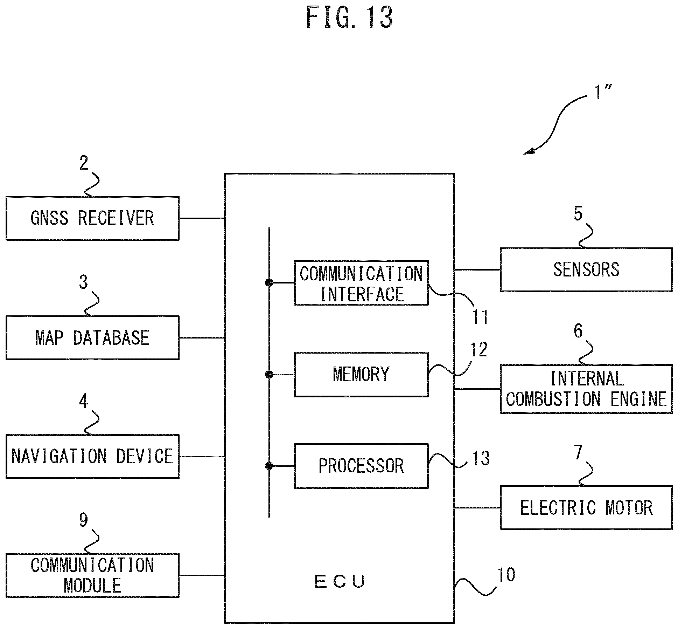

FIG. 13 is a view schematically showing the configuration of the hybrid vehicle 1" according to the fourth embodiment of the present invention. As shown in FIG. 13, the hybrid vehicle 1" is provided with a communication module 9 in addition to a GNSS receiver 2, a map database 3, a navigation device 4, sensors 5, an internal combustion engine 6, an electric motor 7, and an ECU 10. The GNSS receiver 2, the map database 3, the navigation device 4, the sensors 5, the internal combustion engine 6, the electric motor 7, and the communication module 9 are connected to the ECU 10 to be able to communicate through an internal vehicle network based on the CAN or other standard.

The communication module 9 is a device enabling communication between the hybrid vehicle 1" and the outside of the hybrid vehicle 1". The communication module 9 is, for example, a data communication module (DCM) capable of communication with the communication network 50 through the wireless base station 60. Note that the communication module 9 may be assembled into the navigation device 4.

In the fourth embodiment, the hybrid vehicle 1" receives position information of the hybrid vehicle 1" from the server 40. For example, position information for low emission zones is stored in the storage device 42 of the server 40. The server 40 receives the position of the hybrid vehicle 1" from the hybrid vehicle 1" and transmits information regarding whether the position of the hybrid vehicle 1" is within a low emission zone to the hybrid vehicle 1".

### <Processing for Setting Driving Mode>

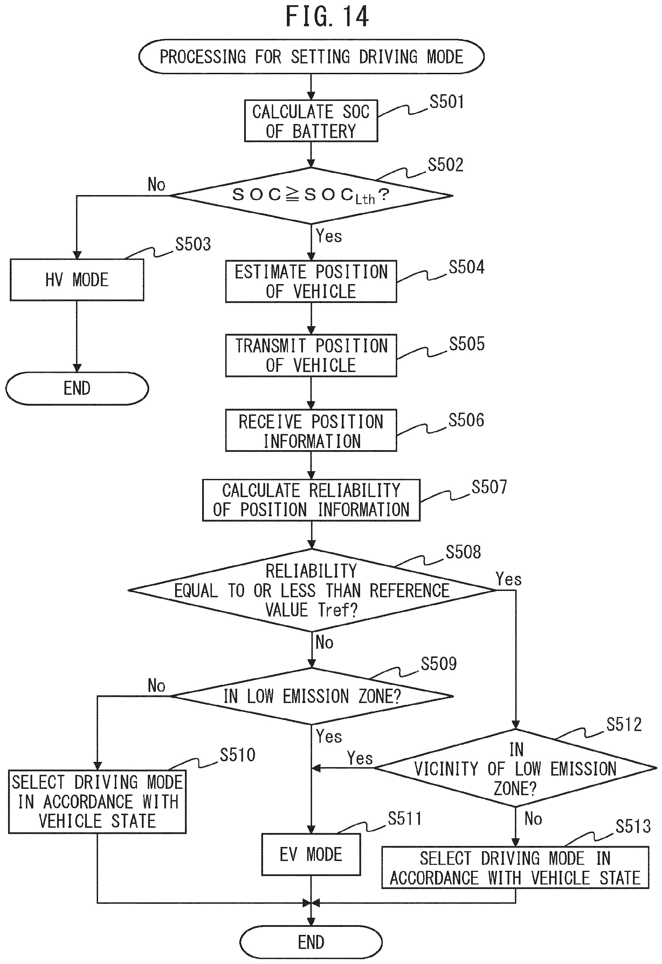

FIG. 14 is a flow chart showing a control routine for processing for setting a driving mode in the fourth embodiment of the present invention. The present control routine is repeatedly executed by the ECU 10 at predetermined execution intervals.

Steps S501 to S504 are executed in the same way as steps S401 to S404 of FIG 11. After step S504, at step S505, the position estimating part 15 transmits the estimated position of the hybrid vehicle 1" to the server 40.

Next, at step S506, the power output part 18 receives the position information of the hybrid vehicle 1" from the server 40. For example, the power output part 18 receives information regarding whether the position of the hybrid vehicle 1" is within a low emission zone from the server 40. Note that the power output part 18 may receive position information of low emission zones from the server 40. Further, the power output part 18 may receive a recommended driving mode at the position of the hybrid vehicle 1" from the server 40. In such a case, the server 40 selects the EV mode as the recommended driving mode if it is judged that the position of the hybrid vehicle 1" is within a low emission zone.

Next, at step S507, in the same way as step S405 of FIG. 11, the reliability calculating part 16 calculates the reliability of the position information. In addition, in the fourth embodiment, the reliability calculating part 16 judges that the reliability of the position information is equal to or less than the reference value T_{ref} if communication between the hybrid vehicle 1" and the server 40 is interrupted. For example, the reliability calculating part 16 judges that the reliability of the position information is equal to or less than the reference value Tref if there is a communication error in at least one of step S505 and step S506.

Next, at step S508, in the same way as step S406 of FIG. 11, the power output part 18 judges whether the reliability of the position information calculated by the reliability calculating part 16 is equal to or less than the reference value T_{ref}.

If it is judged at step S508 that the reliability of the position information is greater than the reference value T_{ref}, the present control routine proceeds to step S509. At step S509, the power output part 18 judges whether the position of the hybrid vehicle 1" is within a low emission zone based on the position information received from the server 40. If it is judged that the position of the hybrid vehicle 1" is outside the low emission zones, the present control routine proceeds to step S510. If it is judged that the position of the hybrid vehicle 1" is within a low emission zone, the present control routine proceeds to step S511.

Step S510 to step S513 are executed in the same way as step S408 to step S411 of FIG. 11.

Above, preferred embodiments according to the present invention were explained, but the present invention is not limited to these embodiments. Various modifications and changes can be made within the language of the claims.

For example, the portable terminal (for example, a smartphone, a tablet terminal, a laptop, etc.) electrically connected to the hybrid vehicle 1, 1', 1" may have the functions of the GNSS receiver 2, the map database 3, and the navigation device 4. Note that, in such cases, the hybrid vehicle 1, 1', 1" can be said to be provided with the GNSS receiver 2, the map database 3, and the navigation device 4.

Further, the charging port 25 and the charger 26 may be omitted from the hybrid vehicle 1, 1', 1". That is, the hybrid vehicle 1, 1', 1" may be a type of hybrid vehicle for which the battery 24 is not charged by an external power source. Further, while the hybrid vehicle 1 shown in FIG. 2 is a so-called series-parallel type of hybrid vehicle, the hybrid vehicle 1, 1', 1" may be a series type, a parallel type, or other type of hybrid vehicle so long as the hybrid vehicle can drive without operating the internal combustion engine.

Further, the above-mentioned embodiments can be freely combined. For example, in the first embodiment or second embodiment, like in the fourth embodiment, the hybrid vehicle 1" may receive position information of the hybrid vehicle 1" from the server 40 and, when communication between the hybrid vehicle 1" and the server 40 is interrupted, the reliability calculating part 16 may judge that the reliability of the position information is equal to or less than a reference value. Further, in the third embodiment or the fourth embodiment, like in the second embodiment, the power output part 18 may notify the occupant of the hybrid vehicle 1' through the HMI 8 of the setting of the driving mode due to the reduction in the reliability of the position information and cancel the setting of the driving mode due to the reduction in the reliability of the position information in accordance with a request of an occupant of the hybrid vehicle 1'.

### REFERENCE SIGNS LIST

1, 1', 1". hybrid vehicle
2. GNSS receiver
6. internal combustion engine
7. electric motor
10. electronic control unit (ECU)
15. position estimating part
16. reliability calculating part
17. SOC calculating part
18. power output part
20. road-vehicle communicator
24. battery

## Claims

1. A control device of a hybrid vehicle (1, 1', 1") for controlling a hybrid vehicle (1, 1', 1") comprising an internal combustion engine (6), an electric motor (7), a battery (24), and a vehicle position detection device (2, 20), comprising:
a position estimating part (15) configured to estimate a position of the hybrid vehicle (1, 1', 1") using the vehicle position detection device (2, 20);
a reliability calculating part (16) configured to calculate a reliability of position information of the hybrid vehicle (1, 1', 1"); and
a power output part (18) configured to control the internal combustion engine (6) and the electric motor (7) to output power for driving use, wherein
the power output part (18) is configured to reduce the output of the internal combustion engine (6) when the reliability is equal to or less than a reference value, compared to when the reliability is higher than the reference value.

2. The control device of a hybrid vehicle (1, 1', 1") according to claim 1, wherein the power output part (18) is configured to increase the output of the electric motor (7) when the reliability is equal to or less than the reference value, compared to when the reliability is higher than the reference value.

3. The control device of a hybrid vehicle (1') according to claim 1 or 2, wherein
the hybrid vehicle (1') further comprises an output device (8), and
if the output of the internal combustion engine (6) is reduced due to reduction in the reliability, the power output part (18) is configured to notify an occupant of the hybrid vehicle (1') of the reduction in the output of the internal combustion engine (6) due to the reduction in the reliability through the output device (8).

4. The control device of a hybrid vehicle (1') according to claim 3, wherein the power output part (18) is configured to cancel the reduction in the output of the internal combustion engine (6) due to reduction in the reliability in accordance with a demand of the occupant of the hybrid vehicle (1').

5. The control device of a hybrid vehicle (1, 1', 1") according to claim 1 or 2, wherein the power output part (18) is configured to make the internal combustion engine (6) stop and use only the electric motor (7) to output the power for driving use when the reliability is equal to or less than the reference value.

6. The control device of a hybrid vehicle (1') according to claim 5, wherein
the hybrid vehicle (1') further comprises an output device (8), and
if a driving mode of the hybrid vehicle (1') is set to an EV mode stopping the internal combustion engine (6) and using only the electric motor (7) to output the power for driving use due to a reduction of the reliability, the power output part (18) is configured to notify an occupant of the hybrid vehicle (1') of setting of the driving mode due to a reduction in the reliability through the output device (8).

7. The control device of a hybrid vehicle (1') according to claim 6, wherein the power output part (18) is configured to cancel the setting of the driving mode due to the reduction in the reliability in accordance with a demand of the occupant of the hybrid vehicle (1').

8. The control device of a hybrid vehicle (1, 1', 1") according to any one of claims 5 to 7, further comprising an SOC calculating part (17) configured to calculate a state of charge of the battery (24), wherein
the hybrid vehicle (1, 1', 1") comprises a GNSS receiver (2) as the vehicle position detection device (2, 20) and the position estimating part (15) is configured to estimate a position of the hybrid vehicle (1, 1', 1") based on an output of the GNSS receiver (2), and
if the position of the hybrid vehicle (1, 1', 1") is near a low emission zone where stopping of the internal combustion engine (6) is requested and the state of charge is equal to or greater than a lower limit threshold, the power output part (18) is configured to make the internal combustion engine (6) stop and use only the electric motor (7) to output the power for driving use when the reliability is equal to or less than the reference value.

9. The control device of a hybrid vehicle (1, 1', 1") according to claim 8, wherein the reliability calculating part (16) is configured to calculate the reliability based on a reception state of the GNSS receiver (2).

10. The control device of a hybrid vehicle (1, 1', 1") according to claim 8 or 9, wherein the reliability calculating part (16) is configured to calculate the reliability as a value equal to or less than the reference value when a supply of an electric power to the GNSS receiver (2) has been stopped for equal to or greater than a predetermined time.

11. The control device of a hybrid vehicle (1, 1', 1") according to any one of claims 8 to 10, wherein the reliability calculating part (16) is configured to calculate the reliability as a value equal to or less than the reference value when the hybrid vehicle (1, 1', 1") is transported.

12. The control device of a hybrid vehicle (1, 1', 1") according to any one of claims 8 to 11, wherein the reliability calculating part (16) is configured to calculate the reliability as a value equal to or less than the reference value when an advancing direction of the hybrid vehicle (1, 1', 1") has been changed by a turntable.

13. The control device of a hybrid vehicle (1") according to any one of claims 1 to 12, wherein
the hybrid vehicle (1") receives position information of the hybrid vehicle (1") from a server (40) outside the hybrid vehicle (1"), and
the reliability calculating part (16) is configured to calculate the reliability as a value equal to or less than the reference value when communication between the hybrid vehicle (1") and the server (40) is interrupted.

14. The control device of a hybrid vehicle (1, 1', 1") according to any one of claims 1 to 13, wherein the reliability calculating part (16) is configured to calculate the reliability as a value equal to or less than the reference value when malfunction of the vehicle position detection device (2, 20) is detected.

15. A control method of a hybrid vehicle (1, 1', 1") comprising an internal combustion engine (6), an electric motor (7), a battery (24), and a vehicle position detection device (2, 20), including:
using the vehicle position detection device (2, 20) to estimate a position of the hybrid vehicle (1, 1', 1");
calculating a reliability of position information of the hybrid vehicle (1, 1', 1"); and
reducing an output of the internal combustion engine (6) when the reliability is equal to or less than a reference value, compared to when the reliability is higher than the reference value.

## Patentansprüche

1. Steuervorrichtung eines Hybridfahrzeugs (1, 1', 1") zum Steuern eines Hybridfahrzeugs (1, 1', 1"), das eine Brennkraftmaschine (6), einen Elektromotor (7), eine Batterie (24) und eine Fahrzeugpositionsdetektionsvorrichtung (2, 20) umfasst, umfassend:
einen Positionsschätzteil (15), der dazu ausgelegt ist, eine Position des Hybridfahrzeugs (1, 1', 1") unter Verwendung der Fahrzeugpositionsdetektionsvorrichtung (2, 20) zu schätzen;
einen Zuverlässigkeitsberechnungsteil (16), der dazu ausgelegt ist, eine Zuverlässigkeit von Positionsinformationen des Hybridfahrzeugs (1, 1', 1") zu berechnen; und
einen Leistungsausgabeteil (18), der dazu ausgelegt ist, die Brennkraftmaschine (6) und den Elektromotor (7) zu steuern, um Leistung zu Antriebszwecken auszugeben, wobei
der Leistungsausgabeteil (18) dazu ausgelegt ist, wenn die Zuverlässigkeit gleich einem oder kleiner als ein Referenzwert ist, die Ausgabe der Brennkraftmaschine (6) im Vergleich dazu zu reduzieren, wenn die Zuverlässigkeit höher als der Referenzwert ist.

2. Steuervorrichtung eines Hybridfahrzeugs (1, 1', 1") nach Anspruch 1, wobei der Leistungsausgabeteil (18) dazu ausgelegt ist, wenn die Zuverlässigkeit gleich dem oder kleiner als der Referenzwert ist, die Ausgabe des Elektromotors (7) im Vergleich dazu zu erhöhen, wenn die Zuverlässigkeit höher als der Referenzwert ist.

3. Steuervorrichtung eines Hybridfahrzeugs (1') nach Anspruch 1 oder 2, wobei
das Hybridfahrzeug (1') ferner eine Ausgabevorrichtung (8) umfasst, und
wenn die Ausgabe der Brennkraftmaschine (6) aufgrund einer Reduzierung der Zuverlässigkeit reduziert wird, der Leistungsausgabeteil (18) dazu ausgelegt ist, einen Insassen des Hybridfahrzeugs (1') von der Reduzierung der Ausgabe der Brennkraftmaschine (6) aufgrund der Reduzierung der Zuverlässigkeit über die Ausgabevorrichtung (8) zu benachrichtigen.

4. Steuervorrichtung eines Hybridfahrzeugs (1') nach Anspruch 3, wobei der Leistungsausgabeteil (18) dazu ausgelegt ist, die Reduzierung der Ausgabe der Brennkraftmaschine (6) aufgrund der Reduzierung der Zuverlässigkeit gemäß einer Anforderung des Insassen des Hybridfahrzeugs (1') abzubrechen.

5. Steuervorrichtung eines Hybridfahrzeugs (1, 1', 1") nach Anspruch 1 oder 2, wobei der Leistungsausgabeteil (18) dazu ausgelegt ist, die Brennkraftmaschine (6) zum Stoppen zu veranlassen und nur den Elektromotor (7) zum Ausgeben der Leistung zu Antriebszwecken zu verwenden, wenn die Zuverlässigkeit gleich dem oder kleiner als der Referenzwert ist.

6. Steuervorrichtung eines Hybridfahrzeugs (1') nach Anspruch 5, wobei
das Hybridfahrzeug (1') ferner eine Ausgabevorrichtung (8) umfasst, und
wenn ein Antriebsmodus des Hybridfahrzeugs (1') aufgrund einer Reduzierung der Zuverlässigkeit auf einen EV-Modus eingestellt wird, der die Brennkraftmaschine (6) stoppt und nur den Elektromotor (7) zum Ausgeben der Leistung zu Antriebszwecken verwendet, der Leistungsausgabeteil (18) dazu ausgelegt ist, einen Insassen des Hybridfahrzeugs (1') über ein Einstellen des Antriebsmodus aufgrund einer Reduzierung der Zuverlässigkeit über die Ausgabevorrichtung (8) zu benachrichtigen.

7. Steuervorrichtung eines Hybridfahrzeugs (1') nach Anspruch 6, wobei der Leistungsausgabeteil (18) dazu ausgelegt ist, die Einstellung des Antriebsmodus aufgrund der Reduzierung der Zuverlässigkeit gemäß einer Anforderung des Insassen des Hybridfahrzeugs (1') abzubrechen.

8. Steuervorrichtung eines Hybridfahrzeugs (1, 1', 1") nach einem der Ansprüche 5 bis 7, ferner umfassend einen SOC-Berechnungsteil (17), der dazu ausgelegt ist, einen Ladezustand der Batterie (24) zu berechnen, wobei
das Hybridfahrzeug (1, 1', 1") einen GNSS-Empfänger (2) als die Fahrzeugpositionsdetektionsvorrichtung (2, 20) umfasst und der Positionsschätzteil (15) dazu ausgelegt ist, eine Position des Hybridfahrzeugs (1, 1', 1") basierend auf einer Ausgabe des GNSS-Empfängers (2) zu schätzen, und
wenn die Position des Hybridfahrzeugs (1, 1', 1") in der Nähe einer Niedrigemissionszone ist, in der ein Stoppen der Brennkraftmaschine (6) erforderlich ist, und der Ladezustand gleich einem oder größer als ein Untergrenzenschwellenwert ist, der Leistungsausgabeteil (18) dazu ausgelegt ist, die Brennkraftmaschine (6) zum Stoppen zu veranlassen und nur den Elektromotor (7) zum Ausgeben der Leistung zu Antriebszwecken zu verwenden, wenn die Zuverlässigkeit gleich dem oder kleiner als der Referenzwert ist.

9. Steuervorrichtung eines Hybridfahrzeugs (1, 1', 1") nach Anspruch 8, wobei der Zuverlässigkeitsberechnungsteil (16) dazu ausgelegt ist, die Zuverlässigkeit basierend auf einem Empfangszustand des GNSS-Empfängers (2) zu berechnen.

10. Steuervorrichtung eines Hybridfahrzeugs (1, 1', 1") nach Anspruch 8 oder 9, wobei der Zuverlässigkeitsberechnungsteil (16) dazu ausgelegt ist, die Zuverlässigkeit als einen Wert gleich dem oder kleiner als der Referenzwert zu berechnen, wenn eine Zufuhr einer elektrischen Leistung zu dem GNSS-Empfänger (2) für gleich oder länger als eine vorbestimmte Zeit gestoppt wurde.

11. Steuervorrichtung eines Hybridfahrzeugs (1, 1', 1") nach einem der Ansprüche 8 bis 10, wobei der Zuverlässigkeitsberechnungsteil (16) dazu ausgelegt ist, die Zuverlässigkeit als einen Wert gleich dem oder kleiner als der Referenzwert zu berechnen, wenn das Hybridfahrzeug (1, 1', 1") transportiert wird.

12. Steuervorrichtung eines Hybridfahrzeugs (1, 1', 1") nach einem der Ansprüche 8 bis 11, wobei der Zuverlässigkeitsberechnungsteil (16) dazu ausgelegt ist, die Zuverlässigkeit als einen Wert gleich dem oder kleiner als der Referenzwert zu berechnen, wenn eine Fahrtrichtung des Hybridfahrzeugs (1, 1', 1") durch eine Drehscheibe geändert wurde.

13. Steuervorrichtung eines Hybridfahrzeugs (1") nach einem der Ansprüche 1 bis 12, wobei
das Hybridfahrzeug (1") Positionsinformationen des Hybridfahrzeugs (1") von einem Server (40) außerhalb des Hybridfahrzeugs (1") empfängt, und
der Zuverlässigkeitsberechnungsteil (16) dazu ausgelegt ist, die Zuverlässigkeit als einen Wert gleich dem oder kleiner als der Referenzwert zu berechnen, wenn eine Kommunikation zwischen dem Hybridfahrzeug (1") und dem Server (40) unterbrochen ist.

14. Steuervorrichtung eines Hybridfahrzeugs (1, 1', 1") nach einem der Ansprüche 1 bis 13, wobei der Zuverlässigkeitsberechnungsteil (16) dazu ausgelegt ist, die Zuverlässigkeit als einen Wert gleich dem oder kleiner als der Referenzwert zu berechnen, wenn eine Fehlfunktion der Fahrzeugpositionsdetektionsvorrichtung (2, 20) detektiert wird.

15. Steuerverfahren eines Hybridfahrzeugs (1, 1', 1"), das eine Brennkraftmaschine (6), einen Elektromotor (7), eine Batterie (24) und eine Fahrzeugpositionsdetektionsvorrichtung (2, 20) umfasst, umfassend:
Verwenden der Fahrzeugpositionsdetektionsvorrichtung (2, 20) zum Schätzen einer Position des Hybridfahrzeugs (1, 1', 1");
Berechnen einer Zuverlässigkeit von Positionsinformationen des Hybridfahrzeugs (1, 1', 1"); und
Reduzieren einer Ausgabe der Brennkraftmaschine (6), wenn die Zuverlässigkeit gleich einem oder kleiner als ein Referenzwert ist, im Vergleich dazu, wenn die Zuverlässigkeit höher als der Referenzwert ist.

## Revendications

1. Dispositif de commande d'un véhicule hybride (1, 1', 1'') pour commander un véhicule hybride (1, 1', 1") comprenant un moteur à combustion interne (6), un moteur électrique (7), une batterie (24), et un dispositif de détection de position de véhicule (2, 20), comprenant :
une partie d'estimation de position (15) configurée pour estimer une position du véhicule hybride (1, 1', 1") en utilisant le dispositif de détection de position de véhicule (2, 20) ;
une partie de calcul de fiabilité (16) configurée pour calculer une fiabilité d'informations de position du véhicule hybride (1, 1', 1") ; et
une partie de production de puissance de sortie (18) configurée pour commander le moteur à combustion interne (6) et le moteur électrique (7) pour produire une puissance de sortie pour l'utilisation pour la conduite, dans lequel
la partie de production de puissance de sortie (18) est configurée pour réduire la puissance de sortie du moteur à combustion interne (6) lorsque la fiabilité est égale ou inférieure à une valeur de référence, par rapport au cas où la fiabilité est supérieure à la valeur de référence.

2. Dispositif de commande d'un véhicule hybride (1, 1', 1") selon la revendication 1, dans lequel la partie de production de puissance de sortie (18) est configurée pour augmenter la puissance de sortie du moteur électrique (7) lorsque la fiabilité est égale ou inférieure à la valeur de référence, par rapport au cas où la fiabilité est supérieure à la valeur de référence.

3. Dispositif de commande d'un véhicule hybride (1') selon la revendication 1 ou 2, dans lequel
le véhicule hybride (1') comprend en outre un dispositif de sortie (8), et,
si la puissance de sortie du moteur à combustion interne (6) est réduite en raison d'une réduction de la fiabilité, la partie de production de puissance de sortie (18) est configurée pour notifier, à un occupant du véhicule hybride (1'), la réduction de la puissance de sortie du moteur à combustion interne (6), due à la réduction de la fiabilité, par l'intermédiaire du dispositif de sortie (8).

4. Dispositif de commande d'un véhicule hybride (1') selon la revendication 3, dans lequel la partie de production de puissance de sortie (18) est configurée pour annuler la réduction de la puissance de sortie du moteur à combustion interne (6) due à une réduction de la fiabilité, conformément à une demande de l'occupant du véhicule hybride (1').

5. Dispositif de commande d'un véhicule hybride (1, 1', 1'') selon la revendication 1 ou 2, dans lequel la partie de production de puissance de sortie (18) est configurée pour faire en sorte que le moteur à combustion interne (6) s'arrête et utiliser seulement le moteur électrique (7) pour produire la puissance de sortie pour l'utilisation pour la conduite, lorsque la fiabilité est égale ou inférieure à la valeur de référence.

6. Dispositif de commande d'un véhicule hybride (1') selon la revendication 5, dans lequel
le véhicule hybride (1') comprend en outre un dispositif de sortie (8), et,
si un mode de conduite du véhicule hybride (1') est réglé à un mode EV arrêtant le moteur à combustion interne (6) et utilisant seulement le moteur électrique (7) pour produire la puissance de sortie pour l'utilisation pour la conduite, en raison d'une réduction de la fiabilité, la partie de production de puissance de sortie (18) est configurée pour notifier, à un occupant du véhicule hybride (1'), un réglage du mode de conduite dû à une réduction de la fiabilité, par l'intermédiaire du dispositif de sortie (8).

7. Dispositif de commande d'un véhicule hybride (1') selon la revendication 6, dans lequel la partie de production de puissance de sortie (18) est configurée pour annuler le réglage du mode de conduite dû à la réduction de la fiabilité, conformément à une demande de l'occupant du véhicule hybride (1').

8. Dispositif de commande d'un véhicule hybride (1, 1', 1") selon l'une quelconque des revendications 5 à 7, comprenant en outre une partie de calcul de SOC (17) configurée pour calculer un état de charge de la batterie (24), dans lequel
le véhicule hybride (1, 1', 1'') comprend un récepteur GNSS (2) en tant que dispositif de détection de position de véhicule (2, 20) et la partie d'estimation de position (15) est configurée pour estimer une position du véhicule hybride (1, 1', 1") sur la base d'une sortie du récepteur GNSS (2), et,
si la position du véhicule hybride (1, 1', 1") est près d'une zone à émissions limitées où l'arrêt du moteur à combustion interne (6) est exigé et l'état de charge est égal ou supérieur à un seuil limite inférieur, la partie de production de puissance de sortie (18) est configurée pour faire en sorte que le moteur à combustion interne (6) s'arrête et utiliser seulement le moteur électrique (7) pour produire la puissance de sortie pour l'utilisation pour la conduite, lorsque la fiabilité est égale ou inférieure à la valeur de référence.

9. Dispositif de commande d'un véhicule hybride (1, 1', 1'') selon la revendication 8, dans lequel la partie de calcul de fiabilité (16) est configurée pour calculer la fiabilité sur la base d'un état de réception du récepteur GNSS (2).

10. Dispositif de commande d'un véhicule hybride (1, 1', 1'') selon la revendication 8 ou 9, dans lequel la partie de calcul de fiabilité (16) est configurée pour calculer la fiabilité sous forme de valeur égale ou inférieure à la valeur de référence, lorsqu'une alimentation en une énergie électrique au récepteur GNSS (2) a été arrêtée pendant une période égale ou supérieure à un temps prédéterminé.

11. Dispositif de commande d'un véhicule hybride (1, 1', 1'') selon l'une quelconque des revendications 8 à 10, dans lequel la partie de calcul de fiabilité (16) est configurée pour calculer la fiabilité sous forme de valeur égale ou inférieure à la valeur de référence, lorsque le véhicule hybride (1, 1', 1") est transporté.

12. Dispositif de commande d'un véhicule hybride (1, 1', 1'') selon l'une quelconque des revendications 8 à 11, dans lequel la partie de calcul de fiabilité (16) est configurée pour calculer la fiabilité sous forme de valeur égale ou inférieure à la valeur de référence, lorsqu'une direction d'avance du véhicule hybride (1, 1', 1") a été changée par une plaque tournante.

13. Dispositif de commande d'un véhicule hybride (1'') selon l'une quelconque des revendications 1 à 12, dans lequel
le véhicule hybride (1") reçoit des informations de position du véhicule hybride (1") à partir d'un serveur (40) à l'extérieur du véhicule hybride (1"), et
la partie de calcul de fiabilité (16) est configurée pour calculer la fiabilité sous forme de valeur égale ou inférieure à la valeur de référence, lorsqu'une communication entre le véhicule hybride (1") et le serveur (40) est interrompue.

14. Dispositif de commande d'un véhicule hybride (1, 1', 1'') selon l'une quelconque des revendications 1 à 13, dans lequel la partie de calcul de fiabilité (16) est configurée pour calculer la fiabilité sous forme de valeur égale ou inférieure à la valeur de référence, lorsqu'une défaillance du dispositif de détection de position de véhicule (2, 20) est détectée.

15. Procédé de commande d'un véhicule hybride (1, 1', 1") comprenant un moteur à combustion interne (6), un moteur électrique (7), une batterie (24), et un dispositif de détection de position de véhicule (2, 20), incluant :
l'utilisation du dispositif de détection de position de véhicule (2, 20) pour estimer une position du véhicule hybride (1, 1', 1"),
le calcul d'une fiabilité d'informations de position du véhicule hybride (1, 1', 1") ; et
la réduction d'une puissance de sortie du moteur à combustion interne (6) lorsque la fiabilité est égale ou inférieure à une valeur de référence, par rapport au cas où la fiabilité est supérieure à la valeur de référence.
